# EUROPEAN PATENT SPECIFICATION

(11) **EP 1 872 044 B1**
(45) Date of publication and mention of the grant of the patent: **07.08.2013**
(21) Application number: 06726559.5
(22) Date of filing: 29.03.2006
(51) Int. Cl.: F16L 33/22, F16L 37/088, F16L 37/092

(54) **TUBE COUPLING DEVICE**
ROHRVERBINDUNGSVORRICHTUNG
DISPOSITIF D ACCOUPLEMENT A UN TUBE

(30) Priority: 29.03.2005 GB 0506161
(43) Date of publication of application: 02.01.2008
(73) Proprietor: Pegler Yorkshire Group Limited, Stourton Leeds West Yorkshire LS10 1RT (GB)
(72) Inventor: EVANS, Karl Andrew c/o Yorkshire Fittings Limited, Yorkshire LS10 1NA (GB); RAPER, Nigel Paul c/o Yorkshire Fittings Limited, Leeds Yorkshire LS10 1NA (GB)
(74) Representative: Makovski, Priscilla Mary
(86) International application number: PCT/GB2006/001151
(87) International publication number: WO 2006/103432

(56) References cited:
- WO-A-2004/104466
- DE-A1- 19 654 435
- US-A- 4 105 226

## Description

This invention relates to a coupling device for coupling tubes, in particular plastics or composite tubes or pipes, in a fluid-tight manner. From now on, the term 'tube' will be used to encompass tubes and pipes.

Conventionally, coupling devices have a body with a bore designed to receive the tube, and include a seal for sealing against the outside of the tube and a grip ring adapted to grip the outside of the tube to prevent its removal. Such coupling devices tend to be difficult to assemble at the manufacturing stage, because all the parts are inside the body.

Coupling devices that are adapted to be received inside a tube wherein the seal and grip ring engage with the inside of the tube are also known. WO 2004/104466 discloses such a device comprising a body having O-ring seals and a gripping means mounted in grooves on an outer surface of the coupling. The gripping means comprises an externally toothed split ring having four axially spaced teeth that extend around the circumference of the ring. The gripping means is typically of metal and has sufficient resilience to positively engage with the internal surface of the tube. The gripping means and seals are adapted to come into engagement with the internal surface of a tube when the fitting is inserted therein. DE-19654435-A discloses a tube coupling device according to the preambule of claim 1 in the shape of a push-in fitting with barbed inner and outer tensioning rings.

However, the internal diameter of tubes can vary due to manufacturing tolerances. This can cause several difficulties with this type of coupling device. The gripping means is manufactured having an external diameter to ensure it can fit within the tube but can also effectively engage the internal surface of the tube to maintain the integrity of the coupling. Thus, if the internal diameter of a tube is larger than average, the gripping means may not engage with the internal surface sufficiently to retain the tube and coupling together. On the other hand, if the internal diameter of a tube is smaller than average, it may require excessive force to compress the gripping means sufficiently to allow the coupling to be inserted within the tube.

According to the present invention, a pressure fluid tube coupling device comprises a body adapted for insertion into a tube to be coupled to the device, the body having a through passage, and on its outer surface sealing means for forming a fluid-tight seal between an internal surface of the tube and the body, and gripping means to retain the tube on the body after manual assembly of the tube and the body, the gripping means having at least one radially-projecting and part-circumferential gripping portion adapted for initial engagement of the internal cylindrical surface of the tube, and wherein the whole circumference of the gripping means is in engagement with the tube when the coupling device is mounted with a tube.

The coupling device of the invention is easy to assemble, as the gripping means and sealing means are located on the outside of the body, not the inside. It is also easy to insert within a tube, as at most only the gripping portion or portions, and not the whole gripping means, need be compressed to allow the gripping means to fit within the tube. This makes assembly of the coupling easier and also allows the radial extent of the gripping portions to be such that a reliable engagement is made with a tube irrespective of the tolerances of the internal diameter of the tube.

Preferably the gripping means includes three or four gripping portions, although the gripping means may have one, two or five gripping portions. However, it will be appreciated that there may be more gripping portions depending upon the application of the coupling, for example, six, seven, eight, nine, ten, eleven or twelve gripping portions. Preferably the gripping portions are equally circumferentially spaced around the grip ring. Alternatively, the gripping portions may be arranged in pairs and therefore the pairs of gripping portions may be equally circumferentially spaced.

The gripping means preferably comprises a grip ring accommodated in an external groove on the body. The grip ring may be of metal or plastics. Conveniently the grip ring is split. Preferably the grip ring comprises a conically shaped ring having the gripping portions thereon. Preferably the gripping portions are formed by a localised increase in the external diameter of the grip ring. Thus, the gripping portions may be raised discrete projections such as nipples or ribs extending from the outside of the grip ring or alternatively, they could be protrusions formed by a gradual increase in the external diameter of the grip ring.

Preferably, the grip ring has at least one cut-out to allow the grip ring to compress in a radial direction more easily. Allowing the grip ring to be compressed ensures that the device is easy to couple with a tube, as the gripping portions will resile radially inwardly to fit within the tube. Furthermore, the presence of cut-outs allows the gripping portions to be constructed such that they project further in a radially outward direction thereby increasing the engagement with the tube, as the cut-outs allow the gripping portions to compress when the coupling is inserted into a tube.

Preferably the cut-out is formed by a radial indentation in the internal surface of the grip ring. Preferably the cut-outs are formed adjacent the gripping portions. Thus, there may be as many cut-outs as there are gripping portions. Preferably the combination of gripping portions and cut-outs adjacent the gripping portions forms a grip ring having a wavy profile.

The groove in which the grip ring is accommodated has an axially outer face inclined to the axis of the body and an axially inner face perpendicular to the axis, with which respective complementary axially outer inclined and axially inner perpendicular faces on the gripping means are adapted to engage. The axial length of the gripping means is less than that of the groove. On insertion of the body into the tube the gripping means is moved so that the perpendicular faces engage, with the gripping means in its radially inmost position where there is a minimum or even no engagement between the gripping portions and the internal surface of the tube. If the tube and body are pulled apart, the gripping means is moved so that the inclined faces engage, and the gripping means in effect moves up a ramp and therefore radially outwardly, to increase the engagement between the gripping portions and the tube. This prevents the disengagement of the body and tube. The remainder of the gripping means, adjacent the gripping portions, may also engage the internal surface of the tube. Thus, as the gripping means moves up the ramp and radially outwardly preferably both the gripping portions and gripping means will be in engagement with the tube.

The sealing means may simply comprise the tube and the body, the arrangement being such that the seal is made by interference between the body and the tube. This is advantageous where the internal surface of the tube is of plastics.

Alternatively, the sealing means may comprise one or more seals mounted in respective external grooves on the body.

Preferably two spaced seals are provided, each within a respective external groove. The seal or seals are preferably located axially outwardly of the gripping means, so that in use they are further than the gripping means from the end of the tube. However, they could be inwardly of the gripping means, or where there are two seals, one each side of the gripping means. The or each seal is preferably an O-ring.

While the gripping means and seal or seals may occupy their own respective grooves, it is also possible for them to share a common groove.

The body may be of metal or plastics. If it is of plastics, the gripping means may be moulded integrally with the body.

Preferably, the body has a stop to define the end position of the end of the tube. The stop may be an external projection on the body.

One embodiment of the device also includes a further retaining means for the tube. The retaining means conveniently comprises a rigid sleeve fixed at one end to a central part of the body, and with its opposing free end projecting towards the free end of the body. The sleeve is spaced from the external surface of the body, to define an annular gap that receives the tube when the body is inserted into the tube. The sleeve resists radial expansion of the tube caused by the gripping engagement of the gripping means and thereby holds the end of the tube firmly in place.

The rigid sleeve is preferably fixed to the body by an inturned flange, which fits in a further external groove in the body. The further external groove may be provided in the stop projection. However, any suitable way of fixing the sleeve, such as by a bayonet connection, by crimping or adhesive, could be used.

Normally the coupling device is designed so that the tube, once inserted, cannot be removed. In one embodiment, however, the gripping means is arranged so that its gripping engagement with the tube is releasable. This is achieved by providing the gripping means with a radial flange projecting outwardly beyond the external diameter of the tube. When the engagement is to be released, the gripping means is moved, using the flange, down the ramp to release the gripping portions from engagement with the tube.

It will be appreciated that the body of the device may be arranged for the coupling of two tubes, or for the coupling of a tube to a further fitting.

There now follows by way of example only a detailed description of the present invention with reference to the accompanying drawings in which;
**Figure 1** is a longitudinal section through a coupling device, showing a tube fitted to one end;
**Figure 2** shows an embodiment of the gripping means in accordance with the invention;
**Figure 3** shows a section through X-X of the gripping means shown in Figure 2;
**Figure 4** shows a section through A-A of the gripping means shown in Figure 2;
**Figure 5** shows a second embodiment of the gripping means in accordance with the invention; and
**Figure 6** shows a section through the gripping means shown in Figure 5.
**Figure 7** shows a longitudinal section through a modification of the coupling device shown in Figure 1; and
**Figure 8** shows a longitudinal section through a further embodiment of the coupling device of the invention.

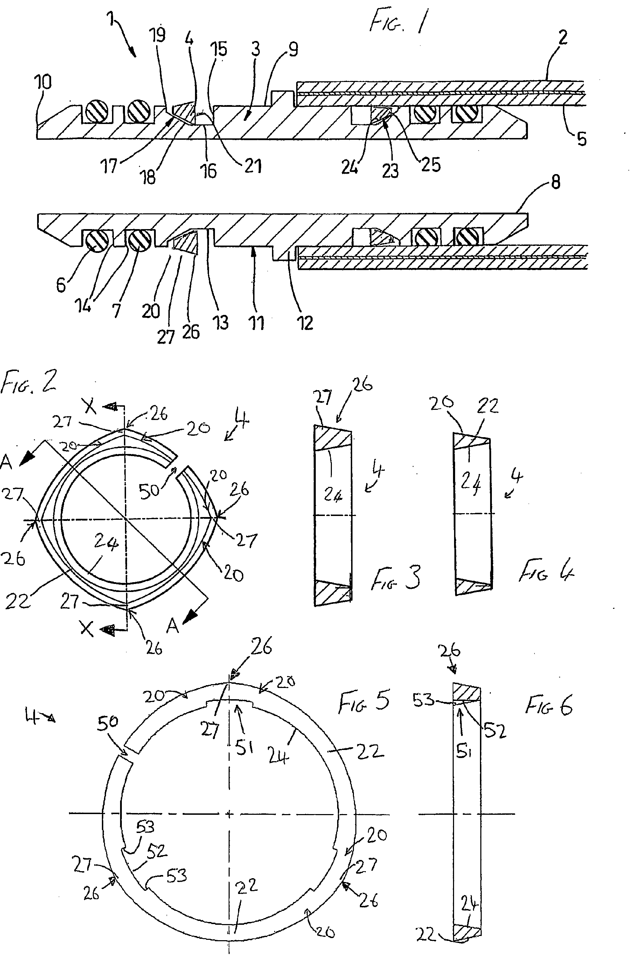

The coupling device 1 of Figure 1 is for coupling two plastics tubes 2, for example for use in domestic water systems, in a fluid-tight manner. Only one tube 2 is shown, on the right-hand side of the Figure, the left-hand side being shown before a tube is attached.

The device 1 comprises a metal body 3 carrying a gripping means in the form of a grip ring 4 for engagement with an internal surface 5 of the tube 2 to retain the tube on the body 3, and two seals 6,7 for sealing in a fluid-tight manner between the internal surface 5 of the tube 2 and the body 3.

The body 3 may be formed from a machined casting or a machined bar, and has a straight through-bore 8, and a profiled external surface 9. Only one end of the body 3 will be described, as the other end is a mirror-image.

The free end 10 of the body 3 is frusto-conical in shape, for ease of insertion into the tube 2, while the central portion 11 has a projection 12 forming a stop for the end of the tube 2. Adjacent the projection 12 the body 3 has an external groove 13 in which the grip ring 4 is received. Two further external grooves 14 are formed adjacent the free end 10 for receiving the seals 6,7.

The seals 6,7 are O-rings, received in annular grooves 14. The groove 13 for the grip ring 4 has an axially inner face 15 perpendicular to the axis of the body 4, a straight base portion 16 parallel to the axis of the body 3 and an axially outer face 17 having a portion 18 contiguous with the base 16 and inclined to the axis, and a radially outer portion 19 perpendicular to the axis again. In a further embodiment (not shown) the straight base portion 16 is omitted and therefore the inclined portion 18 extends directly from the radially outer portion 19 to the axially inner face 17.

The grip ring 4, as shown in Figures 2 to 4, is a plastics member with four gripping portions 26 on its external surface and split 50. The grip ring 4 also has an axially inner face 21 perpendicular to the axis of the body 3, and corresponding to the inner face 15 of the groove 13, and an axially outer face 23 with an inclined portion 24 and a perpendicular portion 25, corresponding to the outer face 17 of the groove 13. Each gripping portion 26 comprises a gripping protrusion 27 having a ramp portion 20 either side, formed by the gradual increase in the external diameter of the grip ring 4. As can be seen from the sections shown in Figures 3 and 4, the grip ring 4 has an increased radial thickness in the region of the gripping portions 26 in comparison to the thickness of the grip ring 4 in the region 22 between the ramps 20. The internal surface 24 of this embodiment of the grip ring 4 in Figure 2 has a substantially constant internal diameter.

To assemble the device 1 the grip ring 4 is first put onto the body 3 into the groove 13, and then the O-rings 6,7 are pushed on from the free end, into their grooves 14, as shown in the left-hand side of Figure 1. It will be appreciated that the O-rings project radially out of the grooves 14, and that the teeth 20 of the grip ring 4 also project radially out of the groove 13.

In use, in order to attach a tube 2 to the device 1, it is simply necessary for the user to insert the free end 10 of the body 3 into the free end of the tube 2, and to push the two together. The body 3 will be inserted until the end of the tubes 2 engages the projection 12. As the body is inserted the O-rings 6,7 are compressed against their grooves 14 and the internal surface 5 of the tube, to ensure a sealing engagement. The gripping portions 26 engage the end of the tube 2 causing the grip ring 4 to be carried axially inwardly until its face 21 engages the corresponding face 15 of the groove 13. The protrusions 27 are compressed into the tube 2 and then project radially out of the groove 13, and engage with the internal surface 5 of the tube 2, to retain it in position.

Thus, the gripping portions 26 are arranged to engage the tube 2 initially instead of the whole circumference of the grip ring 4. This allows the coupling device and tube to be coupled with minimal resistance as only the gripping portions 26 need to be compressed on initial engagement.

If a force is applied to move the tube 2 and body 3 relatively away from each other, the tube 2 will tend to carry the grip ring 4 axially outwardly. The inclined portions 18 and 24 will engage, causing the grip ring 4 to ride up radially outwardly, away from the base of the groove 13, thus increasing the engagement between the tube 2 and the grip ring 4, tending to prevent the separation of the tube 2 and the body 3. Thus, the gripping portions 26 will engage with the tube 2 initially and then, as the grip ring 4 is urged radially outwardly, the remainder 22 of the grip ring 4, including the ramps 20, will engage with the internal surface 5 of the tube 2. If the force is removed, the grip ring 4 will tend to return to the position shown on the right-hand side of Figure 1, which returns the tube 2 as well.

The coupling device 1 is therefore easy to assembly and install within a tube, and will tend to prevent removal. The grip ring of the present invention therefore allows easy initial engagement of the tube and coupling device as well as a secure engagement, as once the portions 26 have engaged and compressed, the remainder of the outside circumference of the grip ring engages the tube.

A further embodiment of the grip ring 4 is shown in Figures 5 and 6. In this embodiment like reference numerals have been applied to like features. In particular, the grip ring comprises a conical ring of metal having an axial split 50 therein. The grip ring of this embodiment has three gripping portions 26 on its external surface. The grip ring 4 similarly has an axially inner face 21 perpendicular to the axis of the body 3 and an axially outer face 23 with an inclined portion 24 and a perpendicular portion 25. Each gripping portion 26 comprises a gripping protrusion 27 having a ramp portion 20 either side, formed by the gradual increase in the external diameter of the grip ring 4. The internal surface 24 of this embodiment includes cut-outs 51 having a base 52 and side walls 53. There are three cut-outs 51 in total that are located adjacent the protrusions 27. The cut-outs 51 allow the protrusions 27 to compress radially inwards when the coupling 1 is inserted into a tube 2, thereby making installation of the coupling easy. However, the cut-outs 51 are of a depth not to substantially affect the strength of the gripping portions 26 to ensure reliable retention of the tube 2 and therefore the integrity of the coupling 1. Furthermore, the cut-outs 51 allow the gripping portions 26 to be constructed so that they project further in a radially outward direction thereby increasing the engagement with the tube 2 without substantially increasing the force required to insert the coupling into a tube. This is because the cut-outs 51 allow the gripping portions 26 to compress radially inwardly to fit within the tube 2 when the coupling 1 is inserted into the tube 2.

In use, the grip ring 4 of Figures 5 and 6 operates in a similar way to the grip ring of Figures 2 to 4, as described above.

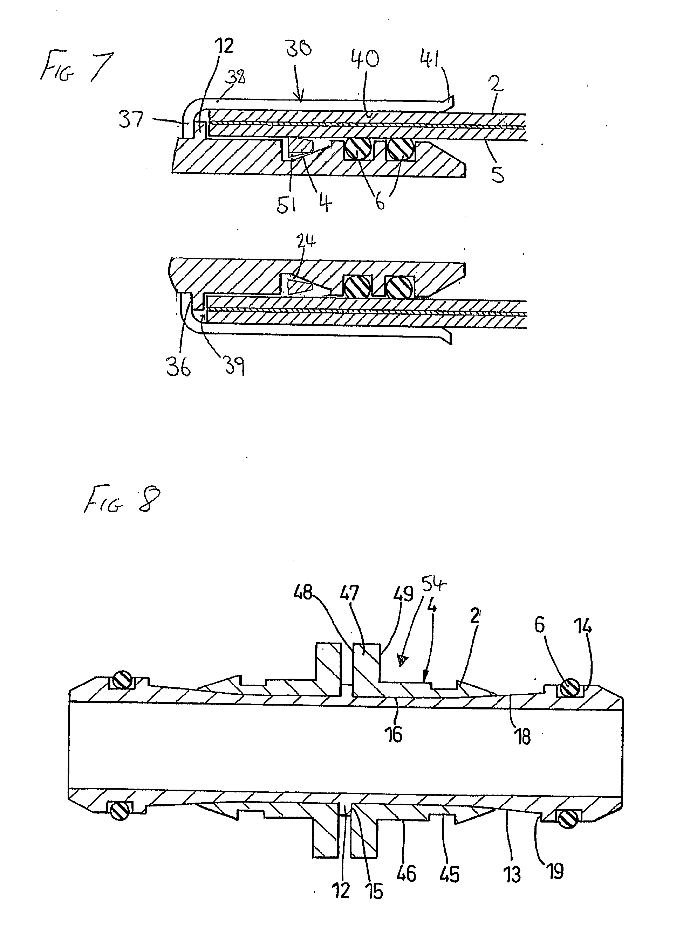

If further retention of the tube 2 is necessary, perhaps because of a higher fluid operating pressure, the coupling embodiment of Figure 7 may be used. Figure 7 shows a modification of the embodiment of the coupling of Figure 1, and corresponding reference numerals have been applied to corresponding parts.

The coupling 1 shown in Figure 7 is identical to that of Figure 1 except that the embodiment of the grip ring 4 is that shown in Figures 5 and 6, and the body 3 is modified in order to accommodate further retention means 30.

The projection 12 is enlarged, and itself has a groove 36 adapted to receive a flange 37 of a rigid sleeve 38 forming the further retention means 30. The sleeve 38 is of metal and surrounds the body 3, with a gap 39 for receiving the tube 2 being defined between the external surface of the body 3 and an internal surface 40 of the sleeve 38. The flange 37 is turned in, and engages the body 3 in the groove 36, while the opposing end 41 of the sleeve 38 is slightly flared, to assist in assembly of the tube 2 and the body 3.

The coupling device 1 of Figure 7 is assembled in a similar way to that of Figure 1.

In use, to attach a tube 2 to the device 1, it is simply necessary for the user to insert the free end 10 of the body 3 into the free end of the tube 2, with the tube 2 occupying the space 39, and to push the two together. The body 3 will be inserted until the end of the tube 2 engages the projection 12. As the body 3 is inserted into the tube 2 the O-rings 6,7 are compressed against their grooves 14 and the internal surface 5 of the tube, to ensure a sealing engagement. The three gripping portions 26 of the grip ring 4 are compressed radially inwardly by the tube 2, into the gap formed by the cut-outs 51. Similarly, if a force is applied to move the tube 2 and body 3 relatively away from each other, the tube 2 will tend to carry the grip ring 4 axially outwardly. The inclined portions 18 and 24 will engage, causing the grip ring 4 to ride up radially outwardly, thus increasing the engagement between the tube 2 and the grip ring 4, tending to prevent the separation of the tube 2 and the body 3. Thus, the gripping portions 26 will engage with the tube 2 initially and then, as the grip ring 4 is urged radially outwardly, the remainder 22 of the grip ring 4, including the ramps 20, will engage with the internal surface 5 of the tube 2. The sleeve 38 therefore holds the tube 2 against the coupling 1.

The devices shown in Figures 1 and 7 are designed as permanent couplings, so that the tube 2 cannot be removed from the body 3.

The embodiment of Figure 8 shows a coupling device which allows for removal of the tube 2, and therefore re-use of the device. The embodiment of Figure 8 includes a modification to the gripping means 4 and corresponding reference numerals have been applied to corresponding parts.

In Figure 8 a single seal 6 and groove 14 are provided. The grip ring groove 13 is extended axially inwardly, right up to the stop projection 12 and has a straight base portion 16. The grip ring 4 is significantly modified. Thus, the grip ring 4 comprises the embodiment shown in Figure 2 but without the split 50, and including a release flange 54. The grip ring 4 has an annular portion 46 of the release flange 54 attached to its axially inner side 21. The portion 46 is of constant external diameter less than the internal diameter of the tube 2, and terminates at its axially inner end in a radial flange 47 which projects outwardly beyond the external diameter of the tube 2. The end face 48 of the flange 47 is adjacent the stop projection 12, while the opposing face 49 forms the stop for the tube 2.

In use, the tube 2 is assembled on the body 3 in the same way as in the previous embodiments, by being pushed on, until the end of the tube 2 reaches the face 49 of the flange 47. A slight retraction of the tube 2 then pulls the grip ring 4 up the ramp of the groove 13, to cause the tooth 20 to engage firmly in the internal surface of the tube 2. After assembly, therefore, there will be an axial gap (not shown) between the end 48 of the flange 47, and the projection 12.

If the tube 2 is to be removed from the body 3, the user moves the grip ring 4 (by means of the flange 47) back into engagement with the projection 12, so that the gripping portions 26 (and possibly the remainder of the grab ring 20, 22) is released from engagement with the tube 2. The tube 2 can then be pulled off the body 3, while the grip ring 4 is held against the projection 12.

Various modifications of the device are possible. For example, the position of the grip ring 4 and seal or seals 6, 7 could be reversed. If two seals are provided, they could be arranged one each side of the grip ring 4. It would also be possible for a seal 6 and the grip ring 4 to share a common groove. The body 3 may be of plastics, rather than metal.

The embodiments shown therefore provide a coupling device which is easy to assemble, and easy to use. In particular, the grip ring ensures that the insertion force of the coupling into a tube is not excessive while maintaining a reliable and robust coupling.

## Claims

1. A pressure fluid tube coupling device (1) comprises a body (3) adapted for insertion into a tube (2) to be coupled to the device, the body (3) having a through passage (8), and on its outer surface sealing means (6,7) for forming a fluid-tight seal between an internal surface (5) of the tube (2) and the body (3), and gripping means (4) to retain the tube on the body after manual assembly of the tube and the body, the gripping means (4) having at least one radially-projecting and part-circumferential gripping portion (26) adapted for initial engagement of the internal cylindrical surface (5) of the tube (2), and **characterised in that** the shape of the gripping means is such that the whole circumference of the gripping means (4) is in engagement with the tube (2) when the coupling device is mounted within the tube.

2. A pressure fluid tube coupling device according to claim 1, in which the gripping means (4) includes between three and five gripping portions (26).

3. A pressure fluid tube coupling device according to any of claims 1 or 2, in which the gripping portions (26) are arranged in pairs.

4. A pressure fluid tube coupling device according to any preceding claim, in which the gripping means comprises a grip ring (4) accommodated in an external groove (13) on the body.

5. A pressure fluid tube coupling device according to any preceding claim, in which the grip ring (4) comprises a conically shaped ring having the gripping portions thereon.

6. A pressure fluid tube coupling device according to any preceding claim, in which the gripping portions (26) are formed by a localised increase in the external diameter of the grip ring or by raised discrete projections extending from the outside of the grip ring.

7. A pressure fluid tube coupling device according to any of claims 1 to 5, in which the gripping portions (26) are formed by a gradual increase in the external diameter of the grip ring.

8. A pressure fluid tube coupling device according to any preceding claim, in which the grip ring (4) has at least one cut-out (51) to allow the grip ring to compress in a radial direction more easily.

9. A pressure fluid tube coupling device according to claim 8, in which the cut-out (51) is formed by a radial indentation in the internal surface of the grip ring.

10. A pressure fluid tube coupling device according to claim 8 or claim 9, in which the cut-outs (51) are formed adjacent the gripping portions (26).

11. A pressure fluid tube coupling device according to claim 10, in which the combination of gripping portions (26) and cut-outs (51) adjacent the gripping portions forms a grip ring having a wavy profile.

12. A pressure fluid tube coupling device according to any preceding claim, in which the groove (13) in which the grip ring is accommodated has an axially outer face (17) inclined to the axis of the body (3) and an axially inner face (15) perpendicular to the axis, with which respective complementary axially outer inclined (23) and axially inner perpendicular (21) faces on the gripping means (4) are adapted to engage.

13. A pressure fluid tube coupling device according to any of claims 1 to 12, in which the sealing means comprises one or more seals (6,7) mounted in respective external grooves on the body.

14. A pressure fluid tube coupling device according to claim 13, in which the seal or seals (6,7) are located axially inwardly of the gripping means (4).

15. A pressure fluid tube coupling device according to claim 13, in which two seals (6,7) are provided, one being axially inwardly of the gripping means (4) and the other being axially outwardly 30.

16. A pressure fluid tube coupling device according to any of claims 1 to 12, in which the sealing means comprises seals (6,7) and wherein the gripping means (4) and seals (6,7) share a common external groove on the body (3).

17. A pressure fluid tube coupling device according to any preceding claim, in which the device includes a further retaining means (30) for the tube (2), the retaining means (30) comprising a rigid sleeve (38), fixed at one end (37) to a central part of the body, and with its opposing free end (41) projecting towards the free end of the body.

18. A pressure fluid tube coupling device according to claim 17, in which the rigid sleeve (38) is fixed to the body by an inturned flange (37), which fits in a further external groove (36) in the body.

19. A pressure fluid tube coupling device according to any of claims 1 to 18, in which the gripping means (4) is arranged so that its gripping engagement with the tube is releasable.

20. A pressure fluid tube coupling device according to claim 19, in which the gripping means (4) is provided with a radial flange (34) projecting outwardly beyond the external diameter of the tube (2) wherein movement of the flange (34) causes the or each gripping portion (26) to release its engagement with the tube.

## Patentansprüche

1. Eine Verbindungsvorrichtung (1) für ein Druckflüssigkeitsrohr umfasst ein Gehäuse (3), das zum Einsetzen in ein Rohr (2) adaptiert ist, das an die Vorrichtung angeschlossen wird, wobei das Gehäuse (3) einen Durchgang (8) hat und an seiner Außenfläche eine Abdichtung (6, 7) hat, um eine flüssigkeitsdichte Abdichtung zwischen einer Innenfläche (5) des Rohrs (2) und dem Gehäuse (3) zu bilden, und eine Greifvorrichtung (4) hat, um das Rohr am Gehäuse zu halten, nachdem Rohr und Gehäuse manuell montiert wurden, wobei die Greifvorrichtung (4) zumindest ein radial hervorstehendes und ein teilweise umlaufendes Greifteil (26) aufweist, das zum Einrasten der zylindrischen Innenfläche (5) des Rohrs (2) dient, und **dadurch gekennzeichnet, dass** die Form der Greifvorrichtung so ist, dass der gesamte Umfang der Greifvorrichtung (4) in das Rohr (2) einrastet, wenn die Verbindungsvorrichtung im Rohr positioniert wird.

2. Eine Verbindungsvorrichtung für ein Druckflüssigkeitsrohr entsprechend Anspruch 1, wobei die Greifvorrichtung (4) zwischen drei und fünf Greifteile (26) hat.

3. Eine Verbindungsvorrichtung für ein Druckflüssigkeitsrohr entsprechend einem der Ansprüche 1 oder 2, bei der die Greifteile (26) paarweise angeordnet sind.

4. Eine Verbindungsvorrichtung für ein Druckflüssigkeitsrohr entsprechend einem der vorhergehenden Ansprüche, bei der die Greifvorrichtung aus einem Greifring (4) besteht, der in einer externen Nut (13) am Gehäuse untergebracht ist.

5. Eine Verbindungsvorrichtung für ein Druckflüssigkeitsrohr entsprechend einem der vorhergehenden Ansprüche, bei der der Greifring (4) ein konisch geformter Ring mit Greifteilen ist.

6. Eine Verbindungsvorrichtung für ein Druckflüssigkeitsrohr entsprechend einem der vorhergehenden Ansprüche. Bei der die Greifteile (26) durch lokalisierte Zunahme des Außendurchmessers des Greifring oder durch angehobene einzelne Ansätze, die von der Außenseite des Greifrings hervorstehen, gebildet werden.

7. Eine Verbindungsvorrichtung für ein Druckflüssigkeitsrohr entsprechend einem der Ansprüche 1 bis 5, bei der die Greifteile (26) zur allmählichen Zunahme des Außendurchmessers des Greifrings gebildet werden.

8. Eine Verbindungsvorrichtung für ein Druckflüssigkeitsrohr entsprechend einem der vorhergehenden Ansprüche, bei der der Greifring (4) zumindest einen Ausschnitt (51) aufweist, damit der Greifring sich einfacher in radialer Richtung zusammendrücken kann.

9. Eine Verbindungsvorrichtung für ein Druckflüssigkeitsrohr entsprechend Anspruch 8, bei der der Ausschnitt (51) durch radiale Vertiefung in der Innenfläche des Greifrings gebildet wird.

10. Eine Verbindungsvorrichtung für ein Druckflüssigkeitsrohr entsprechend Anspruch 8 oder Anspruch 9, bei dem die Ausschnitte (51) neben den Greifteilen (26) gebildet sind.

11. Eine Verbindungsvorrichtung für ein Druckflüssigkeitsrohr entsprechend Anspruch 10, bei der die Kombination von Greifteilen (26) und Ausschnitten (51) neben den Greifteilen einen Greifring mit einem Wellenprofil bilden.

12. Eine Verbindungsvorrichtung für ein Druckflüssigkeitsrohr entsprechend einem der vorhergehenden Ansprüche, bei der die Nut (13), in welcher der Greifring untergebracht ist, eine axiale Außenfläche (17) hat, die zur Achse des Gehäuses (3) gerichtet ist, und eine axiale Innenfläche (15) senkrecht zur Achse aufweist, wobei entsprechend nach außen gerichtete (23) und axial interne senkrechte (21) Flächen an den Greifteilen (4) so adaptiert sind, dass sie in diese eingreifen.

13. Eine Verbindungsvorrichtung für ein Druckflüssigkeitsrohr entsprechend einem der Ansprüche 1 bis 12, bei der die Abdichtung eine oder mehrere Dichtungen (6, 7) umfasst, die jeweils in externen Nuten des Gehäuses sitzen.

14. Eine Verbindungsvorrichtung für ein Druckflüssigkeitsrohr entsprechend Anspruch 13, bei der die Dichtung oder Dichtungen (6, 7) axial inwärts von der Greifvorrichtung (4) positioniert sind.

15. Eine Verbindungsvorrichtung für ein Druckflüssigkeitsrohr entsprechend Anspruch 13, bei der zwei Dichtungen (6, 7) vorgesehen sind, eine einwärts von der Greifvorrichtung (4) und die andere axial auswärts.

16. Eine Verbindungsvorrichtung für ein Druckflüssigkeitsrohr entsprechend einem der Ansprüche 1 bis 12, bei der die Abdichtung Dichtungen (6, 7) aufweist und wobei die Greifvorrichtung (4) und die Dichtungen (6, 7) eine gemeinsame externe Nut am Gehäuse (3) haben.

17. Eine Verbindungsvorrichtung für ein Druckflüssigkeitsrohr entsprechend einem der vorhergehenden Ansprüche, bei der zur Vorrichtung eine weitere Haltevorrichtung (30) für das Rohr (2) gehört, wobei die Haltevorrichtung (30) eine starre Hülse (38) hat, die an einem Ende (37) des zentralen Abschnitts des Gehäuses befestigt ist und bei der das entgegengesetzte, freie Ende (41) in Richtung des freien Endes des Gehäuses hervorsteht.

18. Eine Verbindungsvorrichtung für ein Druckflüssigkeitsrohr entsprechend Anspruch 17, bei der die starre Hülse (38) durch einen nach innen gerichteten Flansch (37) am Körper befestigt ist, der in eine weitere externe Nut (36) des Gehäuses passt.

19. Eine Verbindungsvorrichtung für ein Druckflüssigkeitsrohr entsprechend einem der Sprüche 1 bis 18, bei der die Greifvorrichtung (4) so angeordnet ist, dass ihr einrasten mit dem Rohr wieder abdichtbar ist.

20. Eine Verbindungsvorrichtung für ein Druckflüssigkeitsrohr entsprechend Anspruch 19, bei der die Greifvorrichtung (4) einen radialen Flansch (34) aufweist, der nach außen über den externen Durchmesser des Rohrs (2) herausragt, wobei Bewegen des Flansches (34) verursacht, dass das oder jedes Greifteil (26) aus dem Rohr ausrastet.

## Revendications

1. Un dispositif de couplage pour tube de fluide sous pression (1) qui comprend un corps (3) adapté pour une insertion dans un tube (2) destiné à être couplé au dispositif, le corps (3) possédant un passage traversant (8), et, sur sa surface extérieure, un moyen d'étanchéité (6, 7) destiné à former un joint étanche aux fluides entre une surface interne (5) du tube (2) et le corps (3), et un moyen de serrage (4) destiné à retenir le tube sur le corps après un assemblage manuel du tube et du corps, le moyen de serrage (4) possédant au moins une partie de serrage radialement en saillie et en partie circulaire (26) adaptée pour un accouplement initial de la surface cylindrique interne (5) du tube (2), et **caractérisé en ce que** la forme du moyen de serrage est telle que la totalité de la circonférence du moyen de serrage (4) est en prise avec le tube (2) lorsque le dispositif de couplage est monté à l'intérieur du tube.

2. Un dispositif de couplage pour tube de fluide sous pression selon la Revendication 1, dans lequel le moyen de serrage (4) comprend entre trois et cinq parties de serrage (26).

3. Un dispositif de couplage pour tube de fluide sous pression selon l'une quelconque des Revendications 1 ou 2, dans lequel les parties de serrage (26) sont agencées en paires.

4. Un dispositif de couplage pour tube de fluide sous pression selon l'une quelconque des Revendications précédentes, dans lequel le moyen de serrage comprend un anneau de serrage (4) logé dans une rainure externe (13) sur le corps.

5. Un dispositif de couplage pour tube de fluide sous pression selon l'une quelconque des Revendications précédentes, dans lequel l'anneau de serrage (4) comprend un anneau de forme conique possédant les parties de serrage sur celui-ci.

6. Un dispositif de couplage pour tube de fluide sous pression selon l'une quelconque des Revendications précédentes, dans lequel les parties de serrage (26) sont formées par un accroissement localisé dans le diamètre externe de l'anneau de serrage ou par des protubérances discrètes en relief s'étendant à partir de l'extérieur de l'anneau de serrage.

7. Un dispositif de couplage pour tube de fluide sous pression selon l'une quelconque des Revendications 1 à 5, dans lequel les parties de serrage (26) sont formées par un accroissement graduel dans le diamètre externe de l'anneau de serrage.

8. Un dispositif de couplage pour tube de fluide sous pression selon l'une quelconque des Revendications précédentes, dans lequel l'anneau de serrage (4) possède au moins une découpe (51) destinée à permettre à l'anneau de serrage de se compresser plus aisément dans une direction radiale.

9. Un dispositif de couplage pour tube de fluide sous pression selon la Revendication 8, dans lequel la découpe (51) est formée par une indentation radiale dans la surface interne de l'anneau de serrage.

10. Un dispositif de couplage pour tube de fluide sous pression selon la Revendication 8 ou 9, dans lequel les découpes (51) sont formées de manière adjacente aux parties de serrage (26).

11. Un dispositif de couplage pour tube de fluide sous pression selon la Revendication 10, dans lequel la combinaison de parties de serrage (26) et de découpes (51) adjacentes aux parties de serrage forme un anneau de serrage possédant un profil ondulé.

12. Un dispositif de couplage pour tube de fluide sous pression selon l'une quelconque des Revendications précédentes, dans lequel la rainure (13) dans laquelle l'anneau de serrage est logé possède une face axialement externe (17) inclinée vers l'axe du corps (3) et une face axialement interne (15) perpendiculaire à l'axe, avec laquelle des faces perpendiculaires axialement intérieures (21) et des faces inclinées axialement extérieures (23) complémentaires respectives sur le moyen de serrage (4) sont adaptées de façon à entrer en prise.

13. Un dispositif de couplage pour tube de fluide sous pression selon l'une quelconque des Revendications 1 à 12, dans lequel le moyen d'étanchéité comprend un ou plusieurs joints (6, 7) montés dans des rainures externes respectives sur le corps.

14. Un dispositif de couplage pour tube de fluide sous pression selon la Revendication 13, dans lequel le joint ou les joints (6, 7) sont situés axialement vers l'intérieur du moyen de serrage (4).

15. Un dispositif de couplage pour tube de fluide sous pression selon la Revendication 13, dans lequel deux joints (6, 7) sont fournis, l'un étant axialement vers l'intérieur du moyen de serrage (4) et l'autre étant axialement vers l'extérieur.

16. Un dispositif de couplage pour tube de fluide sous pression selon l'une quelconque des Revendications 1 à 12, dans lequel le moyen d'étanchéité comprend des joints (6, 7) et où le moyen de serrage (4) et les joints (6, 7) partagent une rainure externe commune sur le corps (3).

17. Un dispositif de couplage pour tube de fluide sous pression selon l'une quelconque des Revendications précédentes, dans lequel le dispositif comprend un autre moyen de retenue (30) pour le tube (2), le moyen de retenue (30) comprenant un manchon rigide (38) fixé à une extrémité (37) à une partie centrale du corps et dont l'extrémité libre opposée (41) est en saillie vers l'extrémité libre du corps.

18. Un dispositif de couplage pour tube de fluide sous pression selon la Revendication 17, dans lequel me manchon rigide (38) est fixé au corps par une collerette tournée vers l'intérieur (37) qui s'ajuste dans une autre rainure externe (36) dans le corps.

19. Un dispositif de couplage pour tube de fluide sous pression selon l'une quelconque des Revendications 1 à 18, dans lequel le moyen de serrage (4) est agencé de sorte que son accouplement de serrage avec le tube soit libérable.

20. Un dispositif de couplage pour tube de fluide sous pression selon la Revendication 19, dans lequel le moyen de serrage (4) est muni d'une collerette radiale (34) en saillie vers l'extérieur au-delà du diamètre externe du tube (2) où un déplacement de la collerette (34) amène la ou chaque partie de serrage (26) à libérer son accouplement avec le tube.
